# EUROPEAN PATENT APPLICATION

(11) **EP 1 252 920 A1**
(43) Date of publication of application: **30.10.2002**
(21) Application number: 01902422.3
(22) Date of filing: 11.01.2001
(51) Int. Cl.: B01D 47/02

(54) **AIR PURIFYING DEVICE**

(30) Priority: 19.01.2000 ES 200000114 U
(71) Applicant: Castillo Martinez, Manuel, 0411-0 Campohermoso (ES)
(72) Inventor: Castillo Martinez, Manuel, 0411-0 Campohermoso (ES)
(74) Representative: Cobas Horcajo, Susana
(86) International application number: ES0100006
(87) International publication number: WO01052970

(57) **Abstract**

Apparatus to purify air, which consists of a recipient (2) with water in its interior, in which is introduced, submerged in its interior an end, perforated section (5) of the smoke circulation conduct (6), which is pushed by a turbine, and sucked in by a smoke collector (7) to collect the smoke, with transversal and parallel axes (12) in its interior, with blades (13) which are turned with the aid of a transmission, consisting of sprockets (14) and a chain (15) connected to the axis sprocket (16) of the motor outlet (17).

## Description

### OBJECT OF THE INVENTION

The present specification refers to an apparatus for purifying air, especially the air sprung from a combustion source, and which is formed by a recipient for water in its interior, in which is inserted the end of the perforated of the conduct of smoke circulation, which is pushed by a turbine after being sucked in by a smoke collector, that comes from any source of combustion.

### FIELD OF THE INVENTION

The invention has its application within the field of the industry devoted to the fabrication of apparatuses, devices and auxiliary elements for purifying air.

### BACKGROUND OF THE INVENTION

The applicant knows of the current existence of the problems derived from air pollution as a consequence of the smoke that comes from combustion, mainly at an industrial level.

There exist many devices that are currently used for achieving or trying to clean of smoke, but it has also been proven that most of the time said cleaning is not achieved because the devices themselves are not suited for their specific function, that is the cleaning and purifying of smoke, and in some other cases because the fact that the devices used make it totally not viable to be used.

The evident solution would be to have a device to purify the air available, which will perform its duty in an appropriate way and whose configuration and structure are simplified.

However, the applicant is not aware of the current existence of an invention whose aforementioned characteristics are well suited.

### DESCRIPTION OF THE INVENTION

The apparatus that the invention proposes is configured in itself as a novelty within its application field, which fulfills its goals faithfully and, also, presents a simple constructive structure, with an assembly and maintenance, both safe and convenient.

The invention, in the event of malfunctioning can be fixed easily, allowing for the replacing of any of its parts that get worn out due to their use.

More concretely, the air purifying apparatus will be located preferably at a adequate, safe distance from the point where the combustion takes place, and with the goal to make the smoke get cooler and does not disturb the working of the turbine for pushing and aspiring of the smoke to and from the apparatus that has a smoke inlet and a filtered or purified outlet, thus achieving the temperature reduction and at the same time there are no problems with the pushing turbine.

The air purifying apparatus can be of any shape that is found suitable, preferably rectangular, being constituted from a recipient that adopts the general shape of a prism, which has an upper side laterally which consists of a water inlet while in the lower side there is a water outlet regulated by a valve or key.

In the internal part of the water container recipient up to a certain level there are a number of parallel axes are submerged, onto which a series of blades have been mounted for moving the water.

On these parallel axes are mounted a number of sprockets which are moved by the transmission of a chain connected to the axes of the motor outlet.

A smoke collector sucks in the smoke by the movement of the pushing turbine, with a perforation on the conduction portion to indicate that said conduction enters the inside of the recipient.

When the smoke enters the recipient with water and is shaken, gets washed, with the polluting particles remaining in the water and the completely clean air goes out of the recipient, emerging out of a perforation made on central, upper part of the recipient.

Because of the use that the water is subjected to, it must be recycled, coming out from the lower part of the recipient, into an external sand filter and then used again by going back to the recipient through its upper part.

### DESCRIPTION OF THE DRAWINGS

To complement the description underway and with the goal to help for a better understanding of the invention characteristics, a sheet of paper with planes accompanies the present descriptive memoir, as an integral part of it, in which, with a illustrative but not limiting character, the following is represented:

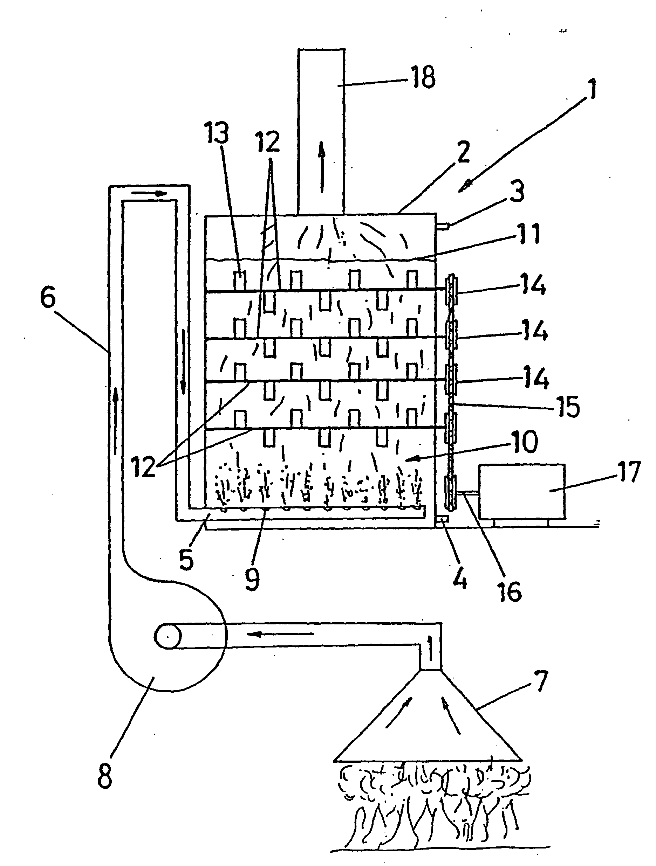

Figure 1.- Corresponds to a section view of the object of the invention, regarding an apparatus to purify air.

### PREFERRED EMBODIMENT OF THE INVENTION

By inspecting Figure 1, the only figure in the application, it can be seen that the device to purify air (1), is constituted by a recipient (2) which presents a water intake or inlet (3) and a water outlet (4) placed in the lower part of said recipient (2).

In the lower part of the recipient (2), there is an inlet (5) of one of the ends of the conduct (6) of the smoke circulation, which is collected with the aid of a smoke collector (7), and aspirating the smoke with the collaboration of the turbine (8).

The end part (5) of the conduct (6) has some perforations (9) for the smoke to exit.

In the recipient (2), the water is up to a certain level (11) and a number of transversal axes (12) with blades (13) are submerged in the water.

In every one of the axes (12) there are sprockets (14) placed on their side ends, which are acted upon by transmission of a chain (15) that is in turn attached to the sprocket of the axis (16) of the motor end (17).

The recipient (2) has an outlet (18) of clean air, treated and washed in the water.

## Claims

1. Apparatus to purify air, **characterized in that** it is constituted by a recipient (2) with water in its interior, in which is introduced, submerged in its interior an end, perforated section (5) of the smoke circulation conduct (6), which is pushed by a turbine (8) after the smoke has been sucked in by a smoke collector (7), said smoke coming from a combustion source, with said recipient (2) presenting in its interior transversal and parallel axes (12) with blades or arms (13) which are moved or turned with the aid of a transmission, consisting of sprockets (14) and a chain (15) connected to the axis sprocket (16) of the motor outlet (17) so that the turning of the blades (13) moves the water along with the smoke, which once washed comes out of the recipient (2) through a conduct (18).

2. Apparatus to purify air, according to the first claim, **characterized in that** the recipient (2) has an upper water inlet (3) and a lower water outlet (4).
